# FASCICULE DE BREVET EUROPEEN

(11) **EP 0 950 368 B1**
(45) Date de publication et mention de la délivrance du brevet: **11.02.2004**
(21) Numéro de dépôt: 99400863.9
(22) Date de dépôt: 08.04.1999
(51) Int. Cl.: A47J 45/06

(54) **Ustensile de cuissson comprenant un capteur de température et un dispositif d'affichage de la température**
Kochgerät mit Temperatur-Sensor und Vorrichtung zum Anzeigen der Temperatur
Cooking utensil with a temperature probe and a device for displaying the temperature

(30) Priorité: 16.04.1998 FR 9804759
(43) Date de publication de la demande: 20.10.1999
(73) Titulaire: SEB S.A., 69130 Ecully (FR)
(72) Inventeur: Adamczewski, David, 74150 Massingy (FR)
(74) Mandataire: Keib, Gérard

(56) Documents cités:
- CH-A- 490 062
- DE-A- 4 439 096
- US-A- 4 541 733
- US-A- 5 441 344

## Description

La présente invention concerne un ustensile de cuisson tel que poêle ou casserole comprenant un capteur de température et un dispositif d'affichage de la température.

Ce capteur et ce dispositif permettent à l'utilisateur de surveiller la température de l'ustensile lorsque celui-ci est en service sur un plan de cuisson et ainsi de réaliser la cuisson des aliments dans des conditions optimales.

Toutefois, les solutions existantes, dévoilées par exemple dans US-A-5 441 344 et US-A-4 541 733, ne sont pas satisfaisantes et posent généralement des problèmes d'intégration du capteur de température à l'ustensile pour obtenir à la fois une mesure fidèle de la température et une parfaite isolation électrique vis-à-vis notamment de l'eau de lavage.

Le but de la présente invention est de remédier aux inconvénients des solutions connues.

Ce but est atteint par un ustensile de cuisson comprenant les caractéristiques de la revendication 1.

La résistance de cette piste résistive varie en fonction de la température, ce qui permet de convertir facilement la valeur de cette résistance ou la variation de celle-ci en valeur de la température.

Le dépôt de cette piste résistive peut s'effectuer de nombreuses manières, telles que par sérigraphie, tampographie, projection thermique, dépôt sous vide etc... Cette technique permet d'obtenir un capteur de température en contact avec une surface relativement étendue de l'ustensile, ce qui permet d'obtenir une température à la fois précise et fidèle.

La piste résistive est obtenue à partir de poudre de métal résistif présentant une variation de sa résistivité avec la température, mélangée à une matrice. Une couche de diélectrique (émail, PTFE, laque, etc...) est appliquée entre l'ustensile et la piste résistive, de manière à isoler électriquement le capteur du métal constituant l'ustensile.

De préférence également, la piste résistive est recouverte par une couche diélectrique isolante.

Cette couche isole électriquement la piste résistive par rapport au milieu extérieur, en particulier l'eau utilisée pour laver l'ustensile et les grilles métalliques présentes sur les plaques de cuisson.

Selon une version particulière de l'invention, lesdits moyens pour mesurer la résistance et convertir celle-ci en valeur de la température sont intégrés dans la poignée de l'ustensile.

De préférence également, lesdits moyens font partie d'un bloc fixé de façon amovible à ladite poignée.

Ce bloc comportant des organes électriques sensibles à l'humidité peut ainsi être détaché de la poignée avant de placer l'ustensile dans un lave-vaisselle.

D'autres particularités et avantages de l'invention apparaîtront encore dans la description ci-après.

Aux dessins annexés donnés à titre d'exemples non limitatifs:
- la figure 1 est une vue schématique du fond extérieur d'une poêle comprenant une piste résistive;
- la figure 2 est une vue en coupe de la paroi du fond de la poêle montrant les différentes couches qui composent cette paroi;
- la figure 3 est une vue en coupe de la poêle montrant la liaison électrique entre la piste résistive et le bloc de mesure et d'affichage intégré dans la poignée de la poêle.

Les figures annexées représentent une poêle comprenant un capteur de température et un dispositif d'affichage de la température.

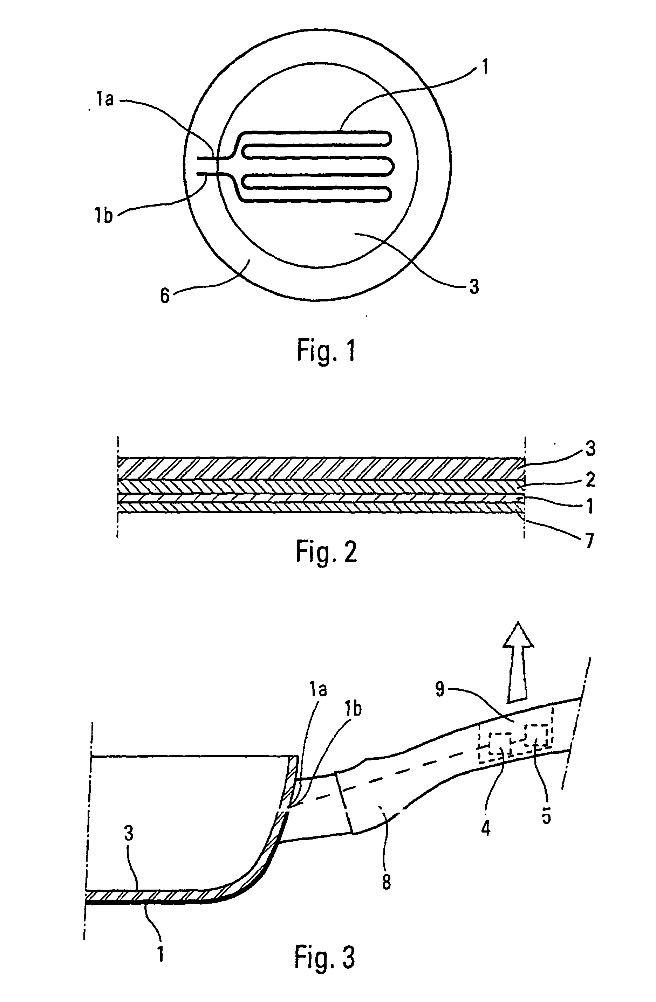

Conformément à l'invention, le capteur de température est constitué par une piste résistive 1 (voir figure 1) sur une couche d'isolant 2 (voir figure 2) recouvrant une partie de la surface 3 de la poêle. Cette piste résistive 1 présente un coefficient de température variant fortement en fonction de la température. Les extrémités 1a, 1b de cette piste résistive 1 sont reliées à des moyens 4, 5 (voir figure 3) pour mesurer la résistance ou la variation de la résistance de la piste résistive 1 et convertir cette résistance ou cette variation de la résistance en valeur de la température.

Dans l'exemple représenté, la couche d'isolant 2 est appliquée sur le fond 3 et la paroi latérale 6 de la poêle.

La piste résistive 1 est déposée sur la couche d'isolant 2 recouvrant le fond 3.

D'autre part, la piste résistive 1 est recouverte par une couche 7 (voir figure 2) électriquement isolante.

Comme indiqué sur la figure 1, la piste résistive 1 présente un contour sinueux dont les deux brins terminaux 1a, 1b, s'étendent sur la paroi latérale 6 de l'ustensile et sont reliés aux moyens 4, 5 pour mesurer la résistance et convertir celle-ci en valeur de la température. Les deux brins terminaux 1a, 1b peuvent être appliqués par tampographie ou autre procédé à partir d'une pâte conductrice.

On voit sur la figure 3 que les moyens 4, 5 pour mesurer la résistance et convertir celle-ci en valeur de la température sont intégrés dans la poignée 8 de l'ustensile et font partie d'un bloc 9 fixé de façon amovible à cette poignée 8.

La piste résistive 1 peut faire partie d'un pont de Wheastone équilibré à la température ambiante et relié à des moyens pour mesurer le courant de déséquilibre de ce pont en fonction de la température de piste résistive 1.

Pour réaliser la piste résistive 1, les deux techniques suivantes peuvent être utilisées, de préférence :

### 1^{ère} technique

1. on applique une couche d'isolant (PTFE, laque, etc...) sur un disque métallique constituant l'ustensile. On sèche cette couche
2. on applique ensuite la piste résistive.
3. les deux extrémités de cette piste résistive sont ensuite recouvertes par deux brins de piste conductrices 1a, 1b, déposés par sérigraphie, tempographie, projection, etc... On sèche ensuite les pistes.
4. on recouvre le tout avec une nouvelle couche de diélectrique en laissant une épargne autour des extrémités 1a, 1b, qui permettront la connexion au système de mesure 4,5 intégré dans l'équipement.
5. le disque est ensuite passé dans un four qui permet de cuire l'ensemble.
6. le disque est ensuite embouti sous forme d'article culinaire.

### 2^{éme} technique

Une deuxième technique utilisable consiste à commencer par emboutir le disque, puis reprendre les étapes 1 à 5, ce qui permet alors l'utilisation de l'émail comme diélectrique. La cuisson finale se fera à 560°C pendant au moins 5 minutes, ce qui permet une vitrification de l'ensemble.

Un exemple de pâte résistive à fort coefficient de température (CT) est la pâte 45449 de la société CERDEC qui présente une résistivité de 0,1 Ohm par □ sous 15µm, un coefficient de température de l'ordre de 3000ppm. Cette pâte se vitrifie à 560°C.

Les brins conducteurs 1a, 1b peuvent être obtenus à partir d'une pâte conductrice contenant de la poudre d'argent vendue par la société CERDEC sous la référence 150415.

## Revendications

1. Ustensile de cuisson comprenant un capteur de température et un dispositif d'affichage de la température, **caractérisé en ce que** le capteur de température est constitué par une piste résistive (1) qui est appliquée sur une première couche électriquement isolante (2) recouvrant une partie (3,6) de la surface de l'ustensile, qui présente une résistance variant en fonction de la température, et dont les extrémités (1a, 1b) sont reliées à des moyens de mesure et de conversion (4,5) pour mesurer la résistance ou la variation de la résistance de la piste résistive (1) et convertir cette résistance ou cette variation de la résistance en valeur de la température.

2. Ustensile conforme à la revendication 1, **caractérisé en ce que** la piste résistive (1) est déposée sur la partie de la première couche électriquement isolante (2) recouvrant le fond (3) de l'ustensile.

3. Ustensile conforme à l'une des revendications 1 ou 2, **caractérisé en ce que** la piste résistive (1) est recouverte par une seconde couche électriquement isolante (7).

4. Ustensile conforme à l'une des revendications 1 à 3, **caractérisé en ce que** la piste résistive (1) présente un contour sinueux dont les deux brins terminaux (1a, 1b) s'étendent sur la paroi latérale (6) de l'ustensile et sont reliés aux moyens de mesure et de conversion (4,5).

5. Ustensile conforme a l'une des revendications 1 à 4, **caractérisé en ce que** les moyens de mesure et de conversion (4,5) sont intégrés dans la poignée (8) de l'ustensile.

6. Ustensile conforme à la revendication 5, **caractérisé en ce que** les moyens de mesure et de conversion (4,5) font partie d'un bloc (9) fixé de façon amovible à la poignée (8).

7. Ustensile conforme à l'une des revendications 1 à 6, **caractérisé en ce que** la piste résistive (1) fait partie d'un pont de Wheastone équilibré à la température ambiante et relié à des moyens pour mesurer le courant de déséquilibre de ce pont, en fonction de la température de la piste résistive.

## Claims

1. A cooking utensil comprising a temperature sensor and a temperature display device, **characterised in that** the temperature sensor comprises a resistive track (1) which is applied to a first electrically insulating layer (2) covering a part (3, 6) of the surface of the utensil, which has a resistance which varies with the temperature, and the ends (1a, 1b) of which are connected to measuring and conversion means (4, 5) for measuring the resistance or the variation of the resistance of the resistive track (1) and converting said resistance or said resistance variation into a temperature value.

2. A utensil according to claim 1, **characterised in that** the resistive track (1) is deposited on the part of the first electrically insulating layer (2) covering the bottom (3) of the utensil.

3. A utensil according to claim 1 or 2, **characterised in that** the resistive track (1) is covered by a second electrically insulating layer (7).

4. A utensil according to any one of claims 1 to 3, **characterised in that** the resistive track (1) has a sinuous contour, of which the two end strands (1a, 1b) extend over the side wall (6) of the utensil and are connected to the measuring and conversion means (4, 5).

5. A utensil according to any one of claims 1 to 4, **characterised in that** the measuring and conversion means (4, 5) are integrated in the utensil handle (8).

6. A utensil according to claim 5, **characterised in that** the measuring and conversion means (4, 5) form part of a block (9) fixed detachably to the handle (8).

7. A utensil according to any one of claims 1 to 6, **characterised in that** the resistive track (1) forms part of a Wheatstone bridge balanced at ambient temperature and connected to means for measuring the imbalance current of said bridge as a function of the temperature of the resistive track.

## Patentansprüche

1. Kochgerät mit einem Temperaturfühler und einer Vorrichtung zum Anzeigen der Temperatur, **dadurch gekennzeichnet, dass** der Temperaturfühler von einer resistiven Bahn (1) gebildet ist, die auf eine erste elektrisch isolierende Schicht (2) aufgebracht ist, welche einen Teil (3, 6) der Oberfläche des Kochgerätes bedeckt, die einen in Abhängigkeit von der Temperatur variierenden Widerstand aufweist, und deren Enden (1a, 1b) mit Mess- und Umwandlungsvorrichtungen (4, 5) verbunden sind, um den Widerstand oder die Änderung des Widerstands der resistiven Bahn (1) zu messen und diesen Widerstand oder diese Änderung des Widerstands in einen Temperaturwert umzuwandeln.

2. Kochgerät gemäß Anspruch 1, **dadurch gekennzeichnet, dass** die resistive Bahn (1) auf dem Bereich der ersten elektrisch isolierenden Schicht (2) aufgebracht ist, der den Boden (3) des Kochgerätes bedeckt.

3. Kochgerät gemäß einem der Ansprüche 1 oder 2, **dadurch gekennzeichnet, dass** die resistive Bahn (1) mit einer zweiten elektrisch isolierenden Schicht (7) beschichtet ist.

4. Kochgerät gemäß einem der Ansprüche 1 bis 3, **dadurch gekennzeichnet, dass** die resistive Bahn (1) eine kurvenförmige Kontur aufweist, deren beide Endadem (1a, 1b) sich auf der Seitenwand (6) des Kochgerätes erstrecken und mit den Mess- und Umwandlungsvorrichtungen (4, 5) verbunden sind.

5. Kochgerät gemäß einem der Ansprüche 1 bis 4, **dadurch gekennzeichnet, dass** die Mess- und Umwandlungsvorrichtungen (4, 5) in den Griff (8) des Kochgerätes integriert sind.

6. Kochgerät gemäß Anspruch 5, **dadurch gekennzeichnet, dass** die Mess- und Umwandlungsvorrichtungen (4, 5) Teil eines Blocks (9) sind, der abnehmbar an dem Griff befestigt ist.

7. Kochgerät gemäß einem der Ansprüche 1 bis 6, **dadurch gekennzeichnet, dass** die resistive Bahn (1) Teil einer mit der Umgebungstemperatur abgeglichenen Wheatstonebrücke ist, die mit Vorrichtungen zur Messung des unabgeglichenen Stroms dieser Brücke in Abhängigkeit von der Temperatur der resistiven Bahn verbunden ist.
